# EUROPEAN PATENT SPECIFICATION

(11) **EP 2 430 484 B1**
(45) Date of publication and mention of the grant of the patent: **09.07.2014**
(21) Application number: 10721014.8
(22) Date of filing: 12.05.2010
(51) Int. Cl.: G02B 6/245, G02B 6/255

(54) **ADAPTER FOR A COATED OPTICAL FIBER, STRIPPING DEVICE AND PROTECTIVE HOUSING**
ADAPTER FÜR EINE BESCHICHTETE OPTISCHE FASER, AUSBRECHWERKZEUG UND SCHUTZGEHÄUSE
ADAPTATEUR POUR FIBRE OPTIQUE REVÊTUE, OUTIL DE DENUDAGE ET BOÎTIER PROTECTEUR

(30) Priority: 15.05.2009 DE 202009007026 U
(43) Date of publication of application: 21.03.2012
(73) Proprietor: CCS Technology Inc., Wilmington, DE 19803 (US)
(72) Inventor: KOSSAT, Rainer, 83229 Aschau (DE); HEIDLER, Christian, 82069 Hohenschäftlarn (DE)
(74) Representative: Epping - Hermann - Fischer
(86) International application number: PCT/EP2010/056604
(87) International publication number: WO 2010/130815

(56) References cited:
- FR-A1- 2 614 142
- FR-A1- 2 741 162
- JP-A- 2004 012 963
- US-A- 5 469 611
- US-B1- 6 273 990

## Description

The application relates to the field of splicing of optical waveguides, in order to connect the end regions of two optical fibers to one another and thus to make a connection which is suitable for optical transmission. In the case of such a procedure, first various preparatory steps must be carried out before the actual splicing process, in order to prepare the end regions of the two optical fibers. During this process, the coating is removed from the end regions of each of the respective fibers or optical waveguides, that is to say the coating is first cut through and then stripped off. In addition to this process called "stripping", it is generally also necessary to clean the optical fiber exposed thereby at the end.

Traditionally, the two steps are carried out using different auxiliary tools, or at least in different units of a corresponding preparation appliance. Furthermore, the outermost end of the exposed end region must be cut off straight with a clean cut (so-called "cleaving"), in order to ensure a complete fusing of both end regions over the entire cross-sectional area of the optical fibers during the subsequent splicing process. The splicing process ("fusion splicing") is finally carried out, normally in a separate appliance, the actual splicer, in which splicing process both end regions are fused to form a single continuous optical fiber (optical waveguide). After this, the spliced connection needs to be protected against external light incidence and other influences and to this end must be provided with a suitable protective housing, which encloses the spliced connection that has been produced.

The above processing steps are traditionally carried out using different instruments, with a protective housing being fitted in the fifth and final step, and remaining permanently on the spliced connection that is produced. High-quality instruments are used for the previous four processing steps and must be constructed with adequate precision in order to guarantee the precision that is required, bearing in mind the small diameter of the optical fibers as well as the precision of processing even after many years of use, that is to say the wear of these appliances.

This entails production efforts associated with the appliances themselves. Furthermore, plural processing steps are required therefore. In particular, the end regions of the two optical fibers which are to be spliced to one another are mounted a number of times on different appliances or appliance units during the processing procedure as sketched above, in each of which they have to be positioned with high precision in an accurate position.

Patent Publication FR 2 614 142 A1 discloses a support comprising a longitudinal channel and means for gripping a sheathed wire; and at least one removable stripping section which can be fitted with the wire support, this stripping section including a longitudinal channel going along the extension of the longitudinal channel of the support while the stripping section is being fitted by the support, first cutting means which can move radially with respect to the longitudinal channel and extending transversely to the latter, second cutting means which can move radially with respect to the longitudinal channel and extending axially to the latter, and extraction means which can move radially with respect to the longitudinal channel and extending transversely to the latter.

In the present application a fiber end region adapter is provided, inter alia, which is mountable on an end region of a coated optical fiber,
- wherein the fiber end region adapter has a first adapter piece and a second adapter piece,
- wherein the first adapter piece has a guide sleeve with a guide opening through which a coated optical fiber can be passed,
- wherein the second adapter piece has a stripping apparatus, by means of which a fiber coating on an optical fiber is removable from a part of the end region of the optical fiber,
- wherein the second adapter piece surrounds the guide sleeve of the first adapter piece, and is to be pulled off the guide sleeve, and
- wherein the fiber end region adapter has an annular cleaning element, which surrounds the guide sleeve of the first adapter piece and, with the aid of the second adapter piece, can be pulled off the guide sleeve and off an end region, which projects out of the guide sleeve, of an optical fiber in the axial direction.

Exemplary embodiments will be explained in more detail in the following with reference to the Figures, in which:
- Figure 1: shows one exemplary embodiment of an fiber end region adapter having a first and a second adapter piece, mounted on the end region of an optical fiber,
- Figure 2: shows the first adapter piece of the fiber end region adapter from Figure 1,
- Figure 3: shows the sequence of the handling steps for stripping the fiber coating by means of the second adapter piece of the fiber end region adapter of Figure 1,
- Figure 4: shows an illustration of the interior of the fiber end region adapter, without the holder that forms part of the second adapter piece,
- Figure 5: shows a spliced connection surrounded by two first adapter pieces,
- Figure 6: shows a protective housing for the spliced connection from Figure 5,
- Figure 7: shows a schematic longitudinal sectional view through the protective housing of Figure 6,
- Figure 8: shows a schematic cross-sectional view of the further adapter piece for the protective housing of Figure 6, illustrated in the opened state,
- Figure 9: shows a schematic longitudinal sectional view, in the form of a detail, of one embodiment of the fiber end region adapter, and
- Figure 10: shows a cross-sectional view of the arrangement of the blades of the fiber end region adapter of Figure 9.

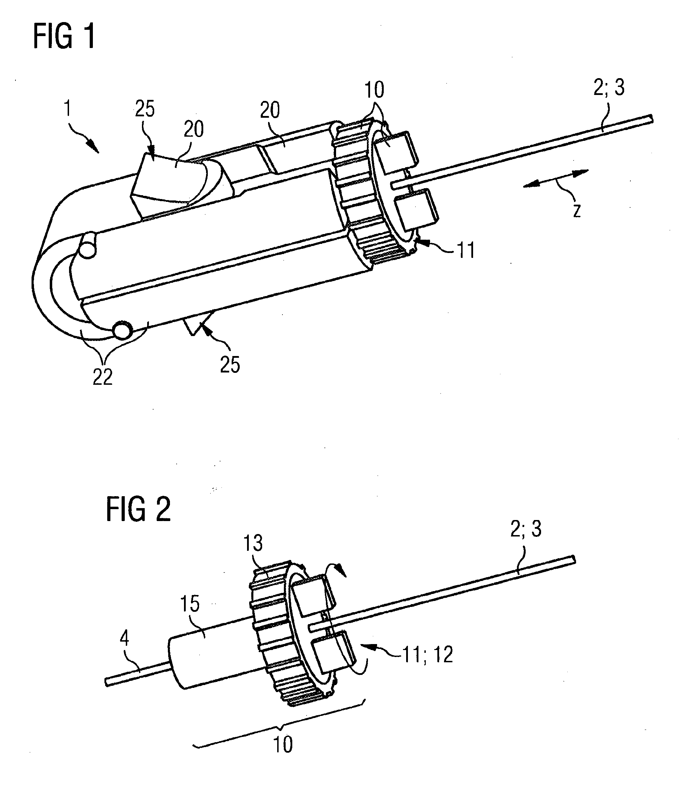

Figure 1 shows a perspective illustration of a schematic exemplary embodiment of an fiber end region adapter 1 which has been pushed onto the end region of an optical fiber 2 provided with a fiber coating 3. The fiber end region adapter 1 has a first adapter piece 10 and a second adapter piece 20. The second adapter piece 20 has a stripping apparatus 25, which will also be explained with reference to the following Figures.

The first adapter piece 10 is used not only to guide the optical fiber 2 but also to fix the fiber end region adapter 1 on the optical fiber 2 in the axial direction z.

In this context, Figure 2 shows the first adapter piece 10, through which the end region 4 of the optical fiber 2 is pushed, together with the fiber coating 3. The first adapter piece 10 essentially forms a guide sleeve 15, whose guide opening is filled by the coated optical fiber 2. In the right-hand insertion area of the guide opening 15, this opening is provided with slots or other cutouts, in order to reduce the cross section of the guide opening and thus to allow the optical fiber to be clamped firmly. A locking mechanism 11, for example an eccentric 12 or a screw mechanism, is provided for this purpose.

In this context, the first adapter piece 10 has an annular locking element 13, which is arranged such that it can rotate around the guide sleeve 15 and reduces the cross section of the guide opening in the outer area of the guide sleeve 15, depending on the angular position, as indicated by the curved arrow. The guide sleeve and the locking element 13 can be rotated with respect to one another with the aid of gripping elements (illustrated on the right in Figure 2). In the locked state, the optical fiber 2 can no longer be moved with respect to the first adapter piece 10 in the axial direction z.

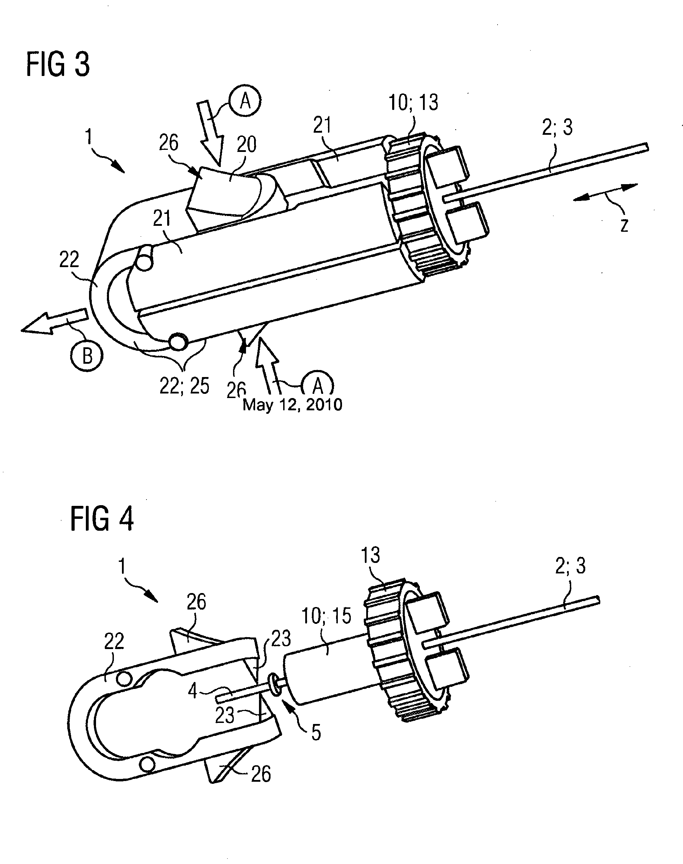

Figure 3 shows the fiber end region adapter 1 from Figure 2, with a schematic illustration of two handling steps A and B for stripping, that is to say for stripping the fiber coating of the end region of the optical fiber. The stripping apparatus 25 of the second adapter piece 20 has a gripping clamp 22, which can be pulled out in the axial direction z from a holder 21 which surrounds the guide sleeve 15 of the first adapter piece 10. Pulling the gripping clamp 22 out axially away from the holder and/or the first adapter piece 10 is indicated by the movement B. Prior to this, however, and as indicated by the arrows A in Figure 3, the two gripping elements 26 of the gripping clamp 22 are pressed together. This results in the coating on the optical fiber being cut through locally, as can be seen in more detail in Figure 4.

Figure 4 shows the interior of the fiber end region adapter 1; the holder 21 has not been illustrated in this case, in order to improve the illustration. However, the figure shows the gripping clamp 22 in that position which it assumes before carrying out the handling steps A, B (Figure 3) relative to the end region 4 of the optical fibers 2, 3 and relative to the first adapter piece 10. Figure 4 shows two blades 23 which face one another in the interior of the fiber end region adapter, are arranged on both sides of the end region 4 and are used to locally cut through the fiber coating 3 in order subsequently to allow it to be pulled off the optical fiber 2 in the axial direction. In order to cut through it, the two gripping elements 26 of the gripping clamp 22 are pushed against one another, as a result of which the blades 23 cut through the fiber coating 3 (handling step A in Figure 3). The gripping clamp 22 is then pulled out of the holder 21 (Figure 3), on its two gripping elements 26 (step B in Figure 3). During this movement, the two gripping elements 26 and therefore the two blades 23 as well still remain pushed against one another in order that the optical fiber 2, that is to say the optical waveguide itself, is exposed on its end region 4.

Figure 4 also shows a development of the fiber end region adapter 1, according to which a cleaning element 5 is provided. The cleaning element 5 is illustrated in an area behind the guide sleeve 15; alternatively, it can likewise also be stretched around the guide sleeve 15 (at least in the original delivery state). In any case, however, the annular cleaning element 5 is wiped over the stripped end region 4 of the optical fiber 2 when the second adapter piece 20 or at least its gripping clamp 22 is pulled off, thus also removing any contamination, for example cut-off residue of the fiber coating. The cleaning element 5 can be a stretched, annular sponge or rubber ring, which is can be impregnated or coated with a chemical cleaning solution, as well.

Only the two handling steps A and B as shown in Figure 3 are required to operate the fiber end region adapter, before the second adapter piece 20 overall is pulled off the first adapter piece 10, likewise in the same axial direction z as in handling step B. In contrast, the first adapter piece 10 still remains on the optical fiber, which is now prepared for the splicing process, and can furthermore also remain permanently on the spliced fiber. In order to make the connection, two fibers which have been prepared with the aid of the fiber end region adapter 1 and are also each fitted with a first adapter piece 10 just need to be inserted into corresponding receptacles in a splicer, and spliced to one another.

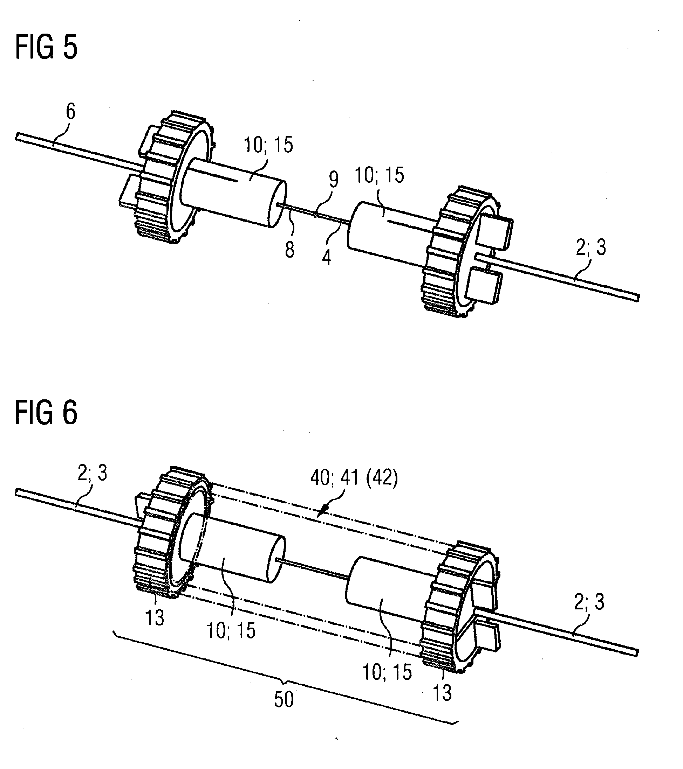

Figure 5 illustrates the result of the splicing process. The respective end regions 4, 8 of two coated optical fibers 2, 6 are illustrated on both sides of the spliced connection 9. The first adapter piece 10 of the further end region 8 (the further optical fiber 6 to which the optical fiber 2 from Figures 1 to 4 has been spliced) is arranged in the opposite orientation to the first adapter piece 10 of the optical fiber 2.

As illustrated in Figure 6, the mutually facing sleeves 15 of the two adapter pieces 10 just need to be fixed in a fixed relative position with respect to one another in order to create a protective housing 50 which is suitable to be left permanently on the spliced connection that has been made. As shown in Figure 6, in addition to the two first adapter pieces 10, a further adapter piece 40 is also provided, which surrounds the two guide sleeves 15 and the spliced connection arranged between them. The further adapter piece 40 can comprise two essentially half-cylindrical housing pieces 41, 42, only one of which is illustrated in Figure 6.

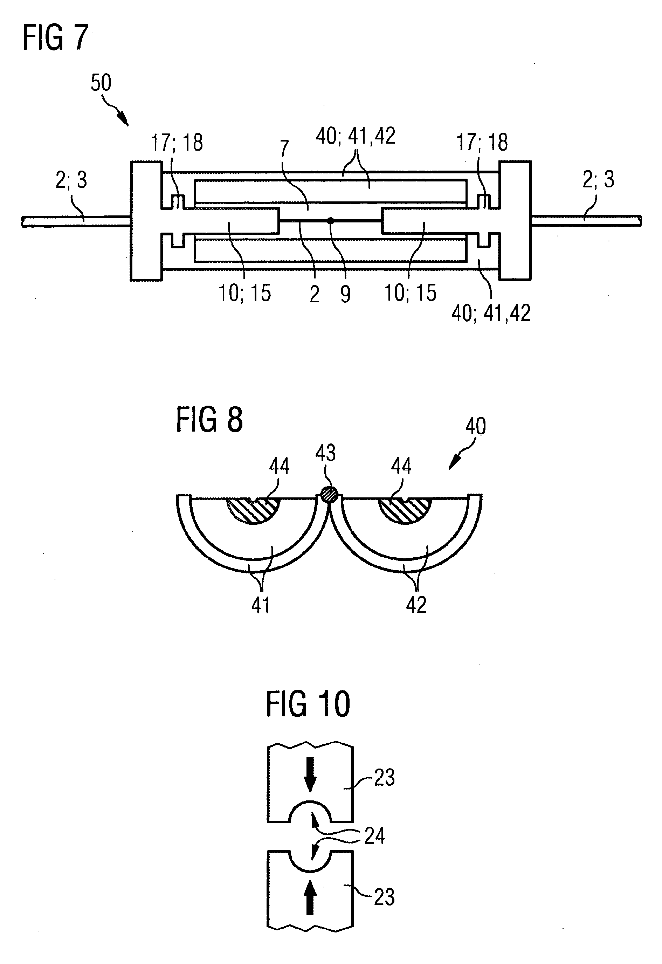

Figure 7 shows a schematic longitudinal section view through the protective housing 50 from Figure 6, in the finished, closed state. In the axial direction, the spliced connection 9 is now completely surrounded by the two half-cylindrical housing pieces 41, 42 of the further adapter piece 40. Furthermore, the two first adapter pieces 10 are mounted on the further adapter piece 40. Corresponding annular projections 17 on the guide sleeves 15 and corresponding annular cutouts 18 in the further adapter piece 40 are used for this purpose (or vice versa).

Figure 8 shows a schematic cross-sectional view through the further adapter piece 40, which is initially still open, according to an embodiment in which the two half-cylindrical housing pieces 41, 42 are mounted on one another with the aid of a joint connection 43 which can pivot. In addition, a cushion 44 is provided in the interior of the housing pieces 41, 42, and surrounds the spliced connection when the further adapter piece 40 is in the closed state. The protective housing 50 which is created after the closing of the further adapter piece 40 and likewise comprises the two first adapter pieces 10 remains permanently on the spliced connection.

The procedure which has been described with reference to Figures 1 to 8 involves considerably fewer and simpler handling steps for insertion and positioning of the fiber ends to be spliced to one another in the processing appliances (in particular for splicing and encapsulation) than a conventional method. Furthermore, the handling of the fiber ends and the stripping of their insulation (and, optionally, also the simultaneous cleaning) are carried out exclusively with the aid of adapter pieces which can be designed as disposable products, and in particular can be produced from plastic. Since no material wear whatsoever occurs in this case, as in the case of the many years of wear that otherwise occur with operator devices that are used repeatedly, the adapter pieces can be produced considerably more cost-effectively.

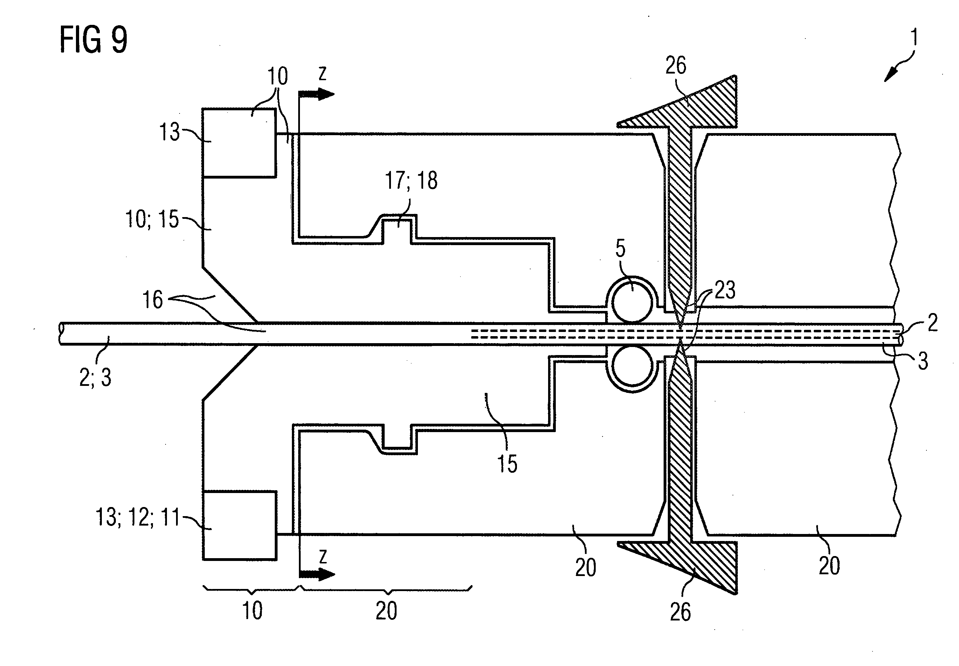

Figure 9 shows a schematic longitudinal section view, in the form of a detail, through one embodiment of an fiber end region adapter 1, in which the internal design is illustrated enlarged, but not to scale. The optical fiber 2, provided with the fiber coating 3, runs in the interior of the guide opening 16 of the first adapter piece 10. On the right-hand side in Figure 9, where the coated fiber emerges from the guide sleeve 15 again, it is surrounded by the second adapter piece 20, only part of which is illustrated in Figure 9. In addition, the precise shape of the gripping clamp and of the holder are not illustrated in detail here. The two gripping elements 26 of the gripping clamp are illustrated, which project into the interior of the second adapter piece 20 and are each fitted with a blade 23. When the two gripping elements 26 are pressed together, the blades 23 cut into the fiber coating 3 and therefore cut through it. When the gripping clamp is pulled out (with the gripping elements 26 still pressed together), or at the latest when the second adapter piece 20 is pulled off completely from the first adapter piece 10, that part of the fiber coating 3 which has been cut off by the blades 23 on the right is stripped from the optical fiber 2, and is therefore removed. At the same time, the second adapter piece 20 can also drive the cleaning element 5 with it which is thus likewise itself pushed in the axial direction z, in the same way as the second adapter piece 20. The axial direction z is indicated by two arrows in Figure 9. When the cleaning element 5 is being driven, it finally contracts to the diameter of the end region of the optical fiber 2 from which the fiber coating 3 has been removed, and thus cleans the optical fiber 2. Apart from this, the cleaning element 5 is designed as already described above.

As shown in Figure 9, the cleaning element 5 is arranged in a cutout in the inner wall of the second adapter piece 20 and is mounted after the guide sleeve 15 of the first adapter piece 10. When the optical fiber is inserted into the fiber end region adapter 1 which comprises the adapter pieces 10 and 20, the optical fibers 2, 3 are therefore passed through the cleaning element 5. Mechanical securing elements such as an annular projection 17 or an annular cutout 18 in the first and second adapter pieces (or vice versa) initially hold the two adapter pieces 10, 20 together until - after the simultaneous stripping and cleaning - the second adapter piece is completely pulled off the first adapter piece 10.

The position of the annular projections 17 and cutouts 18 may in particular be chosen such that the same annular projection 17 on the first adapter piece 10 subsequently, during assembly of the protective housing 50 with the aid of the further adapter piece 40, engages in a corresponding annular cutout 18 in the further adapter piece 40 (compare Figure 7).

With regard to the position of the cleaning element 5 in Figure 9, it is also alternatively possible to provide for the cleaning element 5 and the cutout, which surrounds it, in the second adapter piece 20 to surround the guide sleeve 15 of the first adapter piece 10, for example on the projection of the guide sleeve 15, which is illustrated on the extreme right in Figure 9, and is considerably reduced radially. In this case, the prestretched cleaning element 5 itself prevents the second adapter piece 20 from sliding off the first adapter piece 10, as a result of which there is no need for the mechanical securing elements 17, 18. However, these may, of course, additionally still be provided. When the cleaning element 5 is arranged on a projection of the guide sleeve 15, the coated optical fiber 2, 3 can be inserted into the fiber end region adapter 1 more easily, since the cleaning element 5 is prestretched from the start by the guide sleeve 15 and its projection, which points inwards.

Figure 10 shows a cross-sectional view of the two blades 23 from Figure 9, illustrated from the axial viewing direction. The two blades 23 each have semicircular cutouts 24, whose diameter corresponds to the diameter of the optical fiber 2 without a coating. When the blades 23 are pressed together with the aid of the gripping elements 26 from Figure 9, only the fiber coating 3 is therefore cut through.

A fiber end region adapter is provided which is mountable on an end region of a coated optical fiber,
- wherein the fiber end region adapter has a first adapter piece and a second adapter piece,
- wherein the first adapter piece has a guide sleeve with a guide opening through which a coated optical fiber can be passed,
- wherein the second adapter piece has a stripping apparatus, by means of which a fiber coating on an optical fiber is removable from a part of the end region of the optical fiber, and
- wherein the second adapter piece surrounds the guide sleeve of the first adapter piece, and is to be pulled off the guide sleeve.

The efforts of production and the costs for the splicing of optical waveguides and for the further preparatory and subsequent steps associated therewith are considerably reduced. Equipment which considerably simplifies the handling of end regions of optical fibers and which allows to reduce the time for producing a single spliced connection is provided.

The fiber end region adapter is a multipart adapter which for the first time allows to carry out all of the handling steps required for splicing, from stripping of the fiber coating to permanent encapsulation of the spliced connection, without any intermediate replacement, removal or refitting of further holders or other aids directly on the fiber ends being required. Instead of this, once the fiber end region adapter has been fitted to (that is mounted on or at) the fiber end, it makes it possible to carry out all the method steps with the aid of the adapter, since its first adapter piece also remains on the optical fiber after the splicing process, and forms a component of the permanent protective encapsulation. In particular, the fiber end region adapter described here can also be produced as a disposable product. It not only reduces the effort of production for splicing but also the production costs overall, since there is no longer any need to take account of many years of wear with regard to the choice of material and the manufacturing tolerances, as in the case of conventional products for multiple use.

The fiber end region adapter comprises two separate adapter pieces, wherein the first adapter piece has a guide opening for the coated optical fiber. After being fitted to the optical fiber, the first adapter piece remains permanently thereon; this first adapter piece is therefore used to hold and guide the optical fiber, for example during shortening of the optical fiber (cleaving) and in particular during splicing. For this purpose, the first adapter piece just needs to be inserted into a corresponding receptacle of a cutting apparatus or of a splicer (or of a combined appliance for both method steps). The insertion of the adapter into the corresponding receptacle is considerably less complicated than handling of the flexible fiber end region on its own, since the first adapter piece ensures both lateral guidance and correct axial positioning of the fiber end region.

The second adapter piece is designed such that it surrounds the guide sleeve of the first adapter piece, and can be pulled off it. The second adapter piece has a stripping apparatus for removal of the fiber coating from a part of the end region of the optical fiber. After stripping and, if necessary, cleaning of the fiber end from which the coating has been removed, the second adapter piece can be pulled off the guide sleeve of the first adapter piece, and thrown away. It is likewise feasible for the fiber coating to be stripped off at the same time by the process of pulling the second adapter piece off the first adapter piece, and for the fiber end from which the coating has been removed also to be cleaned during this process.

In both cases, the fiber end region adapter allows a time-saving embodiment of the stripping process, optionally in combination with the cleaning step.

With regard to the first adapter piece, this adapter piece optionally has a locking mechanism, in order to lock its position along the inserted optical fiber. For this purpose, a locking element can be provided which surrounds the guide sleeve at least over part of its axial extent in an annular shape and is rotatable with respect to it. By way of example, the locking mechanism may be an eccentric or cam (like an eccentric wheel or cam wheel, for instance) in which two touching surfaces with a non-circular symmetrical circumference (for example ellipses) are rotated with respect to one another. Depending on the rotation position, this allows an inner contact surface of the annular locking element to be clamped onto an outer surface of the first adapter piece, or its guide sleeve, and to be detached again. A screw thread can also be provided as a locking mechanism, instead of an eccentric. In both cases, the cross section of the guide opening is optionally narrowed locally, thus ensuring secure positioning of the fiber end region with respect to any tensile loads.

The second adapter piece optionally has a holder and a gripping clamp. The holder can be pushed onto the guide sleeve of the first adapter piece, and will optionally have already been pushed onto it in the delivery state. The holder makes it possible to cut through and pull off the fiber coating end with the aid of the gripping clamp, which for this purpose can be pulled out of the holder in the axial direction. The axial movement distance can in this case be limited such that the gripping clamp can move only through a predetermined displacement distance with respect to the holder. Alternatively, the gripping clamp can be pulled completely out of the holder.

The gripping clamp has a plurality of blades, for instance two blades arranged on opposite sides of the fiber end region, which can be pressed together with the aid of the gripping clamp in order to locally cut through the fiber coating. By way of example, blades with a semicircular cutout, whose diameter corresponds to that of the optical waveguide without a coating, are suitable for this purpose. Furthermore, the second adapter piece may have an end stop which fixes and limits the length of the fiber end which can be pushed through the guide opening in the first adapter piece. After the fiber end region adapter has been mounted on the fiber end region, the contact surface to be spliced is therefore located in a predetermined axial position with respect to the guide sleeve.

One development provides that the fiber end region adapter has an annular cleaning element around the guide sleeve which is wiped over the fiber end from which the coating has been removed while the two adapter pieces are being pulled apart from one another, thus cleaning the optical fiber. The method steps of stripping and cleaning can therefore be carried out using the same appliance or the same disposable adapter, that is to say in a more time-saving and more cost-effective manner than was traditionally the case. The annular cleaning element is optionally prestretched such that it contracts when being stripped off the guide sleeve to a diameter which corresponds to the diameter of the optical fiber without a coating. Thus, while the coating piece which has been cut off is being stripped off, the outer surface of the fiber is automatically cleaned. The annular cleaning element which, for example, is a sponge or a rubber ring, can be impregnated or coated with a cleaning liquid as well, in order to assist the cleaning effect. In addition, the cleaning element allows simple and cost-effective fixing of the second adapter piece to the first in the axial direction; in the delivery state, the cleaning sponge or cleaning ring ensures that there is a certain amount of resistance to the second adapter piece being pulled off the first, by which means the fiber end region adapter is additionally held together.

The mechanism and design of the fiber end region adapter allow to produce the first and the second adapter piece from plastic and therefore considerably more cost-effectively without any need to be concerned about adjustment inaccuracies and wear, as in the case of traditional appliances for multiple use and for permanent use.

Each fiber end which is provided and treated with the adapter is subsequently prepared for carrying out the splicing process, and even for the final securing of the spliced connection. All that is needed to do this is for the first adapter pieces, which are still fitted on both sides of the spliced connection, of two adapter end regions to be firmly connected to one another in order to provide permanent encapsulation for protection of the spliced connection.

A protective housing is further provided which has two first adapter pieces (of originally two fiber end region adapters) as well as a further adapter piece. In this case, the two first adapter pieces are mounted on the further adapter piece, to be precise on its two opposite axial ends, such that the further adapter piece surrounds the spliced connection in an annular shape. Annular cutouts can be provided on the further adapter piece for secure attachment of all three adapter pieces, in which cutouts annular projections on the two first adapter pieces engage. Conversely, of course, it is also possible for annular projections on the further adapter piece to engage in annular cutouts in the first adapter pieces. In each case, the further adapter piece forms a secure covering on the spliced connection.

By way of example, the further adapter piece may have two half-cylindrical housing pieces, which can be fitted to one another or are attached to one another from the start, for example by means of a joint connection which can pivot. Furthermore, a cushion for the spliced connection can be provided in the interior of the half-shells of the further adapter piece, for example composed of a gel or some other soft material. The further adapter piece optionally surrounds not only the spliced connection but also the guide sleeves of the two first adapter pieces, axially on both sides of the spliced connection.

Furthermore, a set of adapter pieces is also provided, which has two fiber end region adapters (each having a first and a second adapter piece) and the further adapter piece. Once the second adapter pieces have been removed, the further adapter piece allows the two first adapter pieces to be fixed to one another in mutually opposite orientations, and the secure enclosure of the spliced connection.

In addition, a method is provided, which comprises the following:
- fitting of a fiber end region adapter to an end region of a coated optical fiber, wherein the fiber end region adapter has a first adapter piece with a guide sleeve for the coated optical fiber and a second adapter piece with a stripping apparatus for stripping a fiber coating of the optical fiber,
- stripping of the fiber coating with the aid of the second adapter piece and separation of the second adapter piece from the first adapter piece,
- temporary fitting of the first adapter piece at least to a splicing device and production of a spliced connection of the optical fiber to a further optical fiber,
- removal of the first adapter piece together with the optical fiber from the splicing device, and
- assembly of a protective housing for the spliced connection by mounting the first adapter and a corresponding first adapter of the further optical fiber on at least one further adapter piece.

In this method, it is also possible to provide for the second adapter piece to be thrown away once it has been removed from the first adapter piece. Furthermore, two coated optical fibers can be fitted with and processed using two multipart fiber end region adapters (each comprised of at least two parts and each serving to be mounted on a respective end region of the respective optical fiber) designed in the same way, before the first adapter pieces of the two fiber end region adapters are temporarily fitted to the splicing device, for splicing. After this, the two first adapter pieces together with the splice that has been produced are removed from the splicing device and are connected with the aid of at least one further adapter piece to form a housing which is intended to remain permanently on the splice.

Furthermore, a method is provided which comprises the following:
- fitting of two first adapter pieces or two fiber end region adapters, which each have a first adapter piece, to two coated optical fibers,
- production of a spliced connection between the two optical fibers, wherein the two first adapter pieces remain fitted to the optical fibers, and
- assembly of a protective housing for the spliced connection, comprising the two first adapter pieces and at least one further adapter piece.

The first adapter pieces optionally each have a guide sleeve for the coated optical fiber. Furthermore - after the fitting of the first adapter pieces or of the fiber end region adapter to the optical fibers - the fiber coatings can be stripped off the optical fibers. This can be done in particular with the aid of second adapter pieces of the fiber end region adapter. After use, these are removable from the first adapter pieces and thrown away.

Those components, elements and method steps mentioned in the above method may in particular be in the same form as the components, elemente and method steps with the same names which have been described in this application in the claims, in the introductory part of the description, in the Figures and/or in the figure description. In particular, the described adapter pieces may be disposable products, thus reducing the effort of production and the costs for the handling steps as far as encapsulation of the finished spliced connection.

### List of reference symbols

- 1: Fiber end region adapter
- 2: Optical fiber
- 3: Fiber coating
- 4: End region
- 5: Cleaning element
- 6: Further optical fiber
- 7: Cavity
- 8: Further end region
- 9: Spliced connection
- 10: First adapter piece
- 11: Locking mechanism
- 12: Eccentric
- 13: Locking element
- 15: Guide sleeve
- 16: Guide opening
- 17: Annular projection
- 18: Annular cutout
- 20: Second adapter piece
- 21: Holder
- 22: Gripping clamp
- 23: Blade
- 24: Cutout
- 25: Stripping apparatus
- 26: Gripping element
- 40: Further adapter piece
- 41, 42: Half-cylindrical housing piece
- 43: Joint connection
- 44: Cushion
- 50: Protective housing
- A, B: Handling step
- z: Axial direction

## Claims

1. A fiber end region adapter (1) which is mountable on an end region (4) of a coated optical fiber (2),
- wherein the fiber end region adapter (1) has a first adapter piece (10) and a second adapter piece (20),
- wherein the first adapter piece (10) has a guide sleeve (15) with a guide opening (16) through which a coated optical fiber (2) can be passed,
- wherein the second adapter piece (20) has a stripping apparatus (25), by means of which a fiber coating (3) on an optical fiber (2) is removable from a part of the end region (4) of the optical fiber (2), and
- wherein the second adapter piece (20) surrounds the guide sleeve (15) of the first adapter piece (10) and can be pulled off the guide sleeve (15), **characterised in that**:
the fiber end region adapter (1) has an annular cleaning element (5), which surrounds the guide sleeve (15) of the first adapter piece (10) and, with the aid of the second adapter piece (20), can be pulled off the guide sleeve (15) and off an end region (4), which projects out of the guide sleeve (15), of an optical fiber (2) in the axial direction (z).

2. The fiber end region adapter according to claim 1,
**characterized in that**
the annular cleaning element (5) is a prestretched rubber ring or sponge.

3. The fiber end region adapter according to claim 1 or 2,
**characterized in that**
the annular cleaning element (5) contracts on removal from the guide sleeve (15) and carries with it any contamination on the surface of the end region (4) of the optical fiber (2).

4. The fiber end region adapter according to one of claims 1 to 3,
**characterized in that**
the annular cleaning element (5) is impregnated with a cleaning liquid.

5. The fiber end region adapter according to one of claims 1 to 4,
**characterized in that**
the first adapter piece (10) and the second adapter piece (20) are mounted on one another, wherein the guide sleeve (15) of the first adapter piece (10) is arranged inside the second adapter piece (20) and wherein the annular cleaning element (5) is stretched around the circumference of the guide sleeve (15).

6. The fiber end region adapter according to one of claims 1 to 5,
**characterized in that**
the first adapter piece (10) furthermore has a locking mechanism (11), by means of which the position of the first adapter piece (10) along an inserted optical fiber (2, 3) can be locked, the locking mechanism (11) of the first adapter piece (10) having a locking element (13) which surrounds at least a part of the guide sleeve (15) in an annular shape and is rotatable with respect to the guide sleeve (15).

7. The fiber end region adapter according to claim 6,
**characterized in that**
the cross section of the guide opening (16) is reducable by the locking mechanism (11) of the first adapter piece (10) at that end of the guide sleeve (10) at which the optical fiber (2, 3) can be pushed into the guide sleeve (15) and that the locking mechanism (11) of the first adapter piece (10) comprises an eccentric (12).

8. The fiber end region adapter according to one of claims 1 to 7,
**characterized in that**
the second adapter piece (20) has a holder (21) which is pushed onto or can be pushed onto the guide sleeve (15) of the first adapter piece (10), and further has a gripping clamp (22) for cutting through the fiber coating (3), wherein the gripping clamp (22) can be pulled out of the holder (21) in the axial direction (z).

9. The fiber end region adapter according to claim 8,
**characterized in that**
the gripping clamp (22) has two mutually facing blades (23), each with a cutout (24), which blades (23) enable cutting through the fiber coating (3) by pushing the blades (23) against one another by means of gripping elements (26) of the gripping clamp (22).

10. The fiber end region adapter according to one of claims 1 to 9,
**characterized in that**
the fiber end region adapter (1) is a disposable product, wherein the first adapter piece (10) is destined to be used permanently so as to remain on the end region (4) of a coated optical fibre (2), whereas the second adapter piece (20) is destined to be used only once.

11. The fiber end region adapter according to one of claims 1 to 10,
**characterized in that**
the first and second adapter pieces (10, 20) are formed of plastic.

12. A set of adapter pieces, comprising two fiber end region adapters (1) according to one of claims 1 to 11 and a further adapter piece (40), to which the first adapter pieces (10) of the two fiber end region adapters (1) can be fixed in mutually opposite orientations.

13. The set of adapter pieces of claim 12,
**characterized in that**
the further adapter piece (40) comprises two half-cylindrical housing pieces (41, 42).

14. The set of adapter pieces of claim 13,
**characterized in that**
the two half-cylindrical housing pieces (41, 42) of the further adapter piece (40) are mounted on one another with the aid of a joint connection (43) which can pivot.

15. The set of adapter pieces of one of claims 13 to 14,
**characterized in that**
a cushion (44) is provided in the interior of the housing pieces (41, 42), which cushion (44) surrounds a spliced connection when the further adapter piece (40) is in a closed state.

## Patentansprüche

1. Faserendstück-Adapter (1), der an einem Endstück (4) einer ummantelten optischen Faser (2) angebracht werden kann,
- wobei der Faserendstück-Adapter (1) ein erstes Adapterteil (10) und ein zweites Adapterteil (20) aufweist,
- wobei das erste Adapterteil (10) eine Führungshülse (15) mit einer Führungsöffnung (16) aufweist, durch die eine ummantelte optische Faser (2) durchgeschoben werden kann,
- wobei das zweite Adapterteil (20) eine Abstreifvorrichtung (25) aufweist, mittels der eine Faserummantelung (3) an einer optischen Faser (2) von einem Teil des Endstücks (4) der optischen Faser (2) entfernbar ist, und
- wobei das zweite Adapterteil (20) die Führungshülse (15) des ersten Adapterteils (10) umgibt und von der Führungshülse (15) abgezogen werden kann,
**dadurch gekennzeichnet, dass**:
der Faserendstück-Adapter (1) ein ringförmiges Reinigungselement (5) besitzt, das die Führungshülse (15) des ersten Adapterteils (10) umgibt und mit Hilfe des zweiten Adapterteils (20) von der Führungshülse (15) und einem aus der Führungshülse (15) vorstehenden Endstück (4) einer optischen Faser (2) in der axialen Richtung (z) abgezogen werden kann.

2. Faserendstück-Adapter nach Anspruch 1, **dadurch gekennzeichnet, dass**
das ringförmige Reinigungselement (5) ein vorgespannter Gummiring oder Schwamm ist.

3. Faserendstück-Adapter nach Anspruch 1 oder 2, **dadurch gekennzeichnet, dass**
sich das ringförmige Reinigungselement (5) bei der Abnahme von der Führungshülse (15) zusammenzieht und jegliche Verunreinigung an der Oberfläche des Endstücks (4) der optischen Faser (2) mit sich nimmt.

4. Faserendstück-Adapter nach einem der Ansprüche 1 bis 3, **dadurch gekennzeichnet, dass**
das ringförmige Reinigungselement (5) mit einer Reinigungsflüssigkeit getränkt ist.

5. Faserendstück-Adapter nach einem der Ansprüche 1 bis 4, **dadurch gekennzeichnet, dass**
das erste Adapterteil (10) und das zweite Adapterteil (20) aneinander angebracht sind, wobei die Führungshülse (15) des ersten Adapterteils (10) im Inneren des zweiten Adapterteils (20) angeordnet ist und wobei das ringförmige Reinigungselement (5) um den Umfang der Führungshülse (15) gespannt ist.

6. Faserendstück-Adapter nach einem der Ansprüche 1 bis 5, **dadurch gekennzeichnet, dass**
das erste Adapterteil (10) darüber hinaus einen Arretierungsmechanismus (11) besitzt, mittels dem die Position des ersten Adapterteils (10) entlang einer eingeführten optischen Faser (2, 3) arretiert werden kann, wobei der Arretierungsmechanismus (11) des ersten Adapterteils (10) ein Arretierungselement (13) besitzt, das zumindest einen Teil der Führungshülse (15) in einer Ringform umgibt und im Hinblick auf die Führungshülse (15) drehbeweglich ist.

7. Faserendstück-Adapter nach Anspruch 6,
**dadurch gekennzeichnet, dass**
der Querschnitt der Führungsöffnung (16) durch den Arretierungsmechanismus (11) des ersten Adapterteils (10) an dem Ende der Führungshülse (10) verkleinerbar ist, an dem die optische Faser (2, 3) in die Führungshülse (15) geschoben werden kann, und dass der Arretierungsmechanismus (11) des ersten Adapterteils (10) einen Exzenter (12) aufweist.

8. Faserendstück-Adapter nach einem der Ansprüche 1 bis 7, **dadurch gekennzeichnet, dass**
das zweite Adapterteil (20) einen Halter (21) besitzt, der auf die Führungshülse (15) des ersten Adapterteils (10) aufgeschoben ist oder aufgeschoben werden kann, und darüber hinaus eine Greifklemme (22) zum Durchschneiden der Faserummantelung (3) besitzt, wobei die Greifklemme (22) in der axialen Richtung (z) aus dem Halter (21) herausgezogen werden kann.

9. Faserendstück-Adapter nach Anspruch 8, **dadurch gekennzeichnet, dass**
die Greifklemme (22) zwei einander zugewandte Klingen (23) jeweils mit einem Ausschnitt (24) besitzt, welche Klingen (23) ein Durchschneiden der Faserummantelung (3) ermöglichen, indem die Klingen (23) mittel Greifelementen (26) der Greifklemme (22) gegeneinander geschoben werden.

10. Faserendstück-Adapter nach einem der Ansprüche 1 bis 9, **dadurch gekennzeichnet, dass**
es sich bei dem Faserendstück-Adapter (1) um ein entsorgbares Produkt handelt, wobei das erste Adapterteil (10) dazu bestimmt ist, permanent am Endstück (4) der ummantelten optischen Faser (2) verbleibend verwendet zu werden, wohingegen das zweite Adapterteil (20) nur für einen Einmalgebrauch bestimmt ist.

11. Faserendstück-Adapter nach einem der Ansprüche 1 bis 10, **dadurch gekennzeichnet, dass**
das erste und zweite Adapterteil (10, 20) aus Kunststoff gebildet sind.

12. Satz aus Adapterteilen, zwei Faserendstück-Adapter (1) nach einem der Ansprüche 1 bis 11 und ein weiteres Adapterteil (40) umfassend, an dem die ersten Adapterteile (10) der zwei Faserendstück-Adapter (1) in zueinander entgegengesetzten Ausrichtungen fixiert werden können.

13. Satz aus Adapterteilen nach Anspruch 12,
**dadurch gekennzeichnet, dass**
das weitere Adapterteil (40) zwei halbzylindrische Gehäuseteile (41, 42) aufweist.

14. Satz aus Adapterteilen nach Anspruch 13,
**dadurch gekennzeichnet, dass**
die zwei halbzylindrischen Gehäuseteile (41, 42) des weiteren Adapterteils (40) mit Hilfe einer Gelenkverbindung (43) aneinander angebracht sind, die schwenken kann.

15. Satz aus Adapterteilen nach einem der Ansprüche 13 bis 14,
**dadurch gekennzeichnet, dass**
ein Puffer (44) im Inneren der Gehäuseteile (41, 42) vorgesehen ist, welcher Puffer (44) eine Spleißverbindung umgibt, wenn sich das weitere Adapterteil (40) in einem geschlossenen Zustand befindet.

## Revendications

1. Adaptateur de région d'extrémité de fibre (1) qui est apte à être monté sur une région d'extrémité (4) d'une fibre optique revêtue (2),
- l'adaptateur de région d'extrémité de fibre (1) présentant une première pièce d'adaptateur (10) et une deuxième pièce d'adaptateur (20),
- la première pièce d'adaptateur (10) présentant un manchon de guidage (15) avec une ouverture de guidage (16) à travers laquelle on peut faire passer une fibre optique revêtue (2),
- la deuxième pièce d'adaptateur (20) présentant un appareil de dénudage (25), au moyen duquel un revêtement de fibre (3), sur une fibre optique (2), peut être retiré d'une partie de la région d'extrémité (4) de la fibre optique (2), et
- la deuxième pièce d'adaptateur (20) entourant le manchon de guidage (15) de la première pièce d'adaptateur (10) et pouvant être retirée du manchon de guidage (15),
**caractérisé en ce que** :
l'adaptateur de région d'extrémité de fibre (1) présente un élément de nettoyage annulaire (5), lequel entoure le manchon de guidage (15) de la première pièce d'adaptateur (10) et, à l'aide de la deuxième pièce d'adaptateur (20), peut être retiré du manchon de guidage (15) et de la région d'extrémité (4), ce qui fait saillir le manchon de guidage (15) d'une fibre optique (2) dans la direction axiale (z).

2. L'adaptateur de région d'extrémité de fibre selon la revendication 1,
**caractérisé en ce que**
l'élément de nettoyage annulaire (5) est un anneau de caoutchouc ou une éponge précontraint(e).

3. L'adaptateur de région d'extrémité de fibre selon la revendication 1 ou 2,
**caractérisé en ce que**
l'élément de nettoyage annulaire (5) se contracte lorsqu'il est retiré du manchon de guidage (15) et emporte avec lui toute contamination sur la surface de la région d'extrémité (4) de la fibre optique (2).

4. L'adaptateur de région d'extrémité de fibre selon l'une des revendications 1 à 3,
**caractérisé en ce que**
l'élément de nettoyage annulaire (5) est imprégné d'un liquide de nettoyage.

5. L'adaptateur de région d'extrémité de fibre selon l'une des revendications 1 à 4,
**caractérisé en ce que**
la première pièce d'adaptateur (10) et la deuxième pièce d'adaptateur (20) sont montées l'une sur l'autre, le manchon de guidage (15) de la première pièce d'adaptateur (10) étant disposé à l'intérieur de la deuxième pièce d'adaptateur (20) et l'élément de nettoyage annulaire (5) étant étiré autour de la circonférence du manchon de guidage (15).

6. L'adaptateur de région d'extrémité de fibre selon l'une des revendications 1 à 5,
**caractérisé en ce que**
la première pièce d'adaptateur (10) présente en outre un mécanisme de verrouillage (11), au moyen duquel la position de la première pièce d'adaptateur (10) le long d'une fibre optique insérée (2, 3) peut être verrouillée, le mécanisme de verrouillage (11) de la première pièce d'adaptateur (10) présentant un élément de verrouillage (13) qui entoure au moins une partie du manchon de guidage (15) sous une forme annulaire et est apte à tourner par rapport au manchon de guidage (15).

7. L'adaptateur de région d'extrémité de fibre selon la revendication 6,
**caractérisé en ce que**
la section transversale de l'ouverture de guidage (16) est apte à être réduite par le mécanisme de verrouillage (11) de la première pièce d'adaptateur (10) à l'extrémité du manchon de guidage (10) au niveau de laquelle la fibre optique (2, 3) peut être poussée dans le manchon de guidage (15) et **en ce que** le mécanisme de verrouillage (11) de la première pièce d'adaptateur (10) comprend un excentrique (12).

8. L'adaptateur de région d'extrémité de fibre selon l'une des revendications 1 à 7,
**caractérisé en ce que**
la deuxième pièce d'adaptateur (20) présente une fixation (21) qui est poussée sur ou peut être poussée sur le manchon de guidage (15) de la première pièce d'adaptateur (10), et présente en outre une pince de préhension (22) destinée à sectionner le revêtement de fibre (3), la pince de préhension (22) pouvant être retirée de la fixation (21) dans la direction axiale (z).

9. L'adaptateur de région d'extrémité de fibre selon la revendication 8,
**caractérisé en ce que**
la pince de préhension (22) présente deux lames (23) se faisant face l'une l'autre, chacune étant pourvue d'une découpe (24), lesquelles lames (23) permettent de sectionner le revêtement de fibre (3) par poussée des lames (23) l'une contre l'autre au moyen d'éléments de préhension (26) de la pince de préhension (22).

10. L'adaptateur de région d'extrémité de fibre selon l'une des revendications 1 à 9,
**caractérisé en ce que**
l'adaptateur de région d'extrémité de fibre (1) est un produit jetable, la première pièce d'adaptateur (10) étant destinée à être utilisée de manière permanente de façon à rester sur la région d'extrémité (4) d'une fibre optique revêtue (2), tandis que la deuxième pièce d'adaptateur (20) est destinée à n'être utilisée qu'une seule fois.

11. L'adaptateur de région d'extrémité de fibre selon l'une des revendications 1 à 10,
**caractérisé en ce que**
les première et deuxième pièces d'adaptateur (10, 20) sont constituées de matière plastique.

12. Jeu de pièces d'adaptateur, comprenant deux adaptateurs de région d'extrémité de fibre (1) selon l'une des revendications 1 à 11 et une pièce d'adaptateur supplémentaire (40), à laquelle les premières pièces d'adaptateur (10) des deux adaptateurs de région d'extrémité de fibre (1) peuvent être fixées dans des orientations opposées l'une à l'autre.

13. Le jeu de pièces d'adaptateur de la revendication 12,
**caractérisé en ce que**
la pièce d'adaptateur supplémentaire (40) comprend deux pièces de logement semi-cylindriques (41, 42).

14. Le jeu de pièces d'adaptateur de la revendication 13,
**caractérisé en ce que**
les deux pièces de logement semi-cylindriques (41, 42) de la pièce d'adaptateur supplémentaire (40) sont montées l'une sur l'autre à l'aide d'un raccord de jonction (43) pouvant pivoter.

15. Le jeu de pièces d'adaptateur de l'une des revendications 3 à 14,
**caractérisé en ce que**
un coussinet (44) est prévu à l'intérieur des pièces de logement (41, 42), lequel coussinet (44) entoure un raccord épissé lorsque la pièce d'adaptateur supplémentaire (40) est dans un état fermé.
